# EUROPÄISCHE PATENTSCHRIFT

(11) **EP 2 856 389 B1**
(45) Veröffentlichungstag und Bekanntmachung des Hinweises auf die Patenterteilung: **18.12.2019**
(21) Anmeldenummer: 13726463.6
(22) Anmeldetag: 23.05.2013
(51) Int. Cl.: G06K 7/10, G06K 19/07

(54) **CHIPKARTE UND CHIPKARTENLESER MIT OPTISCHER SCHNITTSTELLE**
CHIP CARD AND CARD READER WITH OPTICAL INTERFACE
CARD A PUCE ET LECTEUR DE CARTE A INTERFACE OPTIQUE

(30) Priorität: 01.06.2012 DE 102012209255
(43) Veröffentlichungstag der Anmeldung: 08.04.2015
(73) Patentinhaber: Bundesdruckerei GmbH, 10969 Berlin (DE)
(72) Erfinder: TIETKE, Markus, 12247 Berlin (DE); FISCHER, Jörg, 13053 Berlin (DE); TRÖLENBERG, Stefan, 15749 Mittenwalde (DE)
(74) Vertreter: Patentship Patentanwaltsgesellschaft mbH
(86) Internationale Anmeldenummer: PCT/EP2013/060615
(87) Internationale Veröffentlichungsnummer: WO 2013/178527

(56) Entgegenhaltungen:
- EP-A1- 0 583 526
- DE-A1- 3 047 322
- DE-A1-102004 058 165
- DE-A1-102005 008 255
- DE-A1-102006 031 422
- GB-A- 2 395 613
- US-A1- 2004 012 496
- US-A1- 2007 063 055
- US-A1- 2007 132 592
- US-A1- 2009 009 288

## Beschreibung

Die vorliegende Erfindung betrifft das Gebiet der Chipkarten, insbesondere das Gebiet der Chipkarten mit einem integrierten Schaltkreis.

Die Offenlegungsschrift DE 10 2004 058 165 A1 zeigt einen tragbaren Datenträger, der als Chipkarte ausgebildet sein kann.

Die Offenlegungsschrift DE 10 2006 031 422 A1 zeigt eine Chipkarte, die eine Schnittstelle zur Kommunikation mit einer Schnittstelle eines Lesegeräts/Schreibgeräts umfasst. Die Schnittstellen der Chipkarte respektive des Lesegeräts/Schreibgeräts können beispielsweise als RFID-Schnittstelle ausgebildet sein.

Moderne Chipkarten sind oft mit integrierten Schaltkreisen ausgestattet, welche beispielswiese zur Identifizierung einer Chipkarte oder eines Benutzers der Chipkarte elektronisch ausgelesen werden müssen. Hierzu werden Chipkartenleser eingesetzt, welche auf die integrierten Schaltkreise zugreifen können.

Die Kommunikation zwischen einem Chipkartenleser und einer Chipkarte kann entweder kontaktgebunden über elektrische Kontakte oder kontaktlos erfolgen. Die Kommunikation zwischen einer kontaktlosen Chipkarte und einem Chipkartenleser erfolgt üblicherweise im Rahmen der RFID-Technologie (RFID: Radio Frequency Identification) über ein elektromagnetisches Feld. Ein Nachteil hierbei ist jedoch, dass elektromagnetische Felder abgehört werden können.

Es ist daher die Aufgabe der vorliegenden Erfindung, ein Konzept für eine drahtlose Kommunikation zwischen einem Chipkartenleser und einer Chipkarte zu schaffen, das abhörsicherer ist.

Diese Aufgabe wird durch die Merkmale der unabhängigen Ansprüche gelöst. Vorteilhafte Weiterbildungsformen sind Gegenstand der abhängigen Ansprüche, der Figuren sowie der Beschreibung.

Die vorliegende Erfindung basiert auf der Erkenntnis, dass die obige Aufgabe durch eine optische Kommunikation zwischen einer Chipkarte und einem Chipkartenleser gelöst werden kann. Denn die freie Ausbreitung von optischen Signalen kann beispielsweise durch die Verwendung von lichtundurchlässigen Bauelementen wesentlich einfacher und effizienter unterbunden werden als die freie Ausbreitung von elektromagnetischen Feldern.

Dadurch wird ein Zugriff auf den integrierten Schaltkreis beispielsweise durch einen Chipkartenleser, welcher ebenfalls mit einer optischen Kommunikationsschnittstelle ausgestattet ist, ermöglicht. Für herkömmliche Chipkartenleser, welche nicht mit optischen Kommunikationsschnittstellen ausgestattet sind, kann beispielsweise der nachstehend beschriebene Kommunikationsadapter vorgesehen sein, welcher optisch mit der Chipkarte kommuniziert und die optischen Signale in beispielsweise elektromagnetische Felder umwandeln kann. Ein derartiger Kommunikationsadapter kann ebenfalls in der Gestalt einer Chipkarte ausgeführt sein.

Die Chipkarte kann eines der folgenden Identifikationsdokumente sein: Identitätsdokument, wie Personalausweis, Reisepass, Zugangskontrollausweis, Berechtigungsausweis, Unternehmensausweis, Steuerzeichen oder Ticket, Geburtsurkunde, Führerschein oder Kraftfahrzeugausweis, Zahlungsmittel, beispielsweise eine Bankkarte oder Kreditkarte. Die Chipkarte kann ein- oder mehrlagig bzw. papier- und/oder kunststoffbasiert sein. Die Chipkarte kann aus kunststoffbasierten Folien aufgebaut sein, welche zu einem Kartenkörper mittels Verkleben und/oder Laminieren zusammengefügt werden, wobei die Folien bevorzugt ähnliche stoffliche Eigenschaften aufweisen. Es können aber auch Submodule aus einem Fremdmaterial wie Polyamid, Glasfaserverbundstoffe oder andere integriert werden.

Weitere Ausführungsbeispiele werden Bezug nehmend auf die beiliegenden Zeichnungen näher erläutert. Es zeigen:
- Fig. 1: ein Blockdiagramm einer Chipkarte;
- Fig. 2: ein Blockdiagramm eines Chipkartenlesers;
- Fig. 3: eine Chipkarte-Chipkartenleseranordnung;
- Fig. 4: einen optischen Sensor; und
- Fig. 5: eine Chipkarte-Chipkartenleseranordnung.

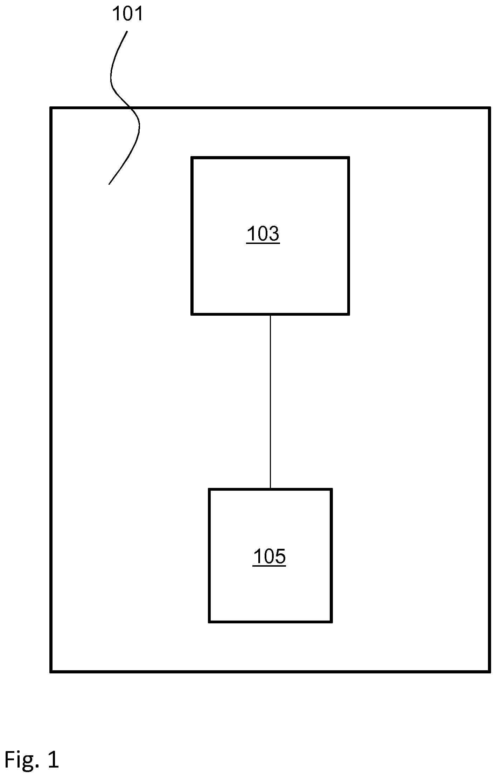

Fig. 1 zeigt ein Diagramm einer Chipkarte 101, welche eine Smartcard sein kann. Die Chipkarte 101 umfasst einen integrierten Schaltkreis 103, welcher beispielsweise als ein Chip ausgebildet ist. Der integrierte Schaltkreis 103 kann beispielsweise einen Speicher und/oder einen Prozessor bereitstellen. Die Chipkarte 101 umfasst ferner eine optische Kommunikationsschnittstelle 105, welche zur Kommunikation mit dem Prozessor 103 eingerichtet ist. Hierzu kann die optische Kommunikationsschnittstelle 105 einen optischen Wandler aufweisen, welcher empfangene optische Signale in elektrische Signale umsetzt und die elektrischen Signale dem integrierten Schaltkreis 103 zuleitet. Der Wandler kann ferner elektrische Signale von dem integrierten Schaltkreis 103 empfangen und in optische Signale umsetzen. Die optische Kommunikationsschnittstelle unterscheidet sich von herkömmlichen RFID-Schnittstellen, welche auf herkömmlichen Chipkarten verwendet werden gemäß einer Ausführungsform dadurch, dass zur Datenübertragung optische Signale und nicht RF-Signale verwendet werden.

Die in Fig. 1 dargestellte Chipkarte kann beispielsweise mit einem Chipkartenleser zusammenwirken, welcher ebenfalls eine optische Kommunikationsschnittstelle aufweist.

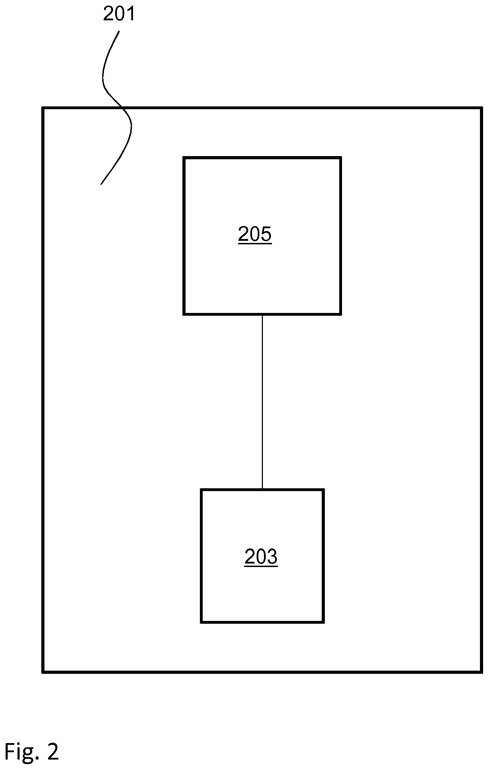

Fig. 2 zeigt ein vereinfachtes Strukturdiagramm eines derartigen Chipkartenlesers 201 mit einer optischen Kommunikationsschnittstelle 203 und beispielsweise einem Prozessor 205. Die optische Kommunikationsschnittstelle 203 ist eingerichtet, optische Signale auszusenden und optische Signale zu empfangen. Hierzu kann die optische Kommunikationsschnittstelle 203 einen optischen Wandler aufweisen, welcher, wie vorstehend ausgeführt, optische Signale in elektrische Signale und/oder vice versa umsetzt. Die elektrischen Signale können dem Prozessor 205 zugeführt werden, welcher die gesamte Verarbeitungslogik eines Chipkartenlesers implementieren kann. Der Chipkartenleser 201 kann ferner weitere Komponenten aufweisen, wie etwa eine Netzwerkschnittstelle, welche in Fig. 1 der Einfachheit halber nicht dargestellt sind.

Die in den Fig. 1 und 2 dargestellten Kommunikationsschnittstellen 105 und 203 sind beispielsweise eingerichtet, optische Signale derselben Wellenlänge auszutauschen und zu empfangen. Die optischen Signale können Infrarotsignale, Ultraviolettsignale oder Weißlichtsignale sein.

Gemäß einer Ausführungsform können die optischen Kommunikationsschnittstellen 105, 203 LEDs oder OLEDs umfassen. Gemäß einer weiteren Ausführungsform kann die optische Kommunikationsschnittstelle 105 eine Anzeige, beispielsweise ein Display, umfassen, auf dem die anzuzeigende Information, beispielsweise mittels eines zweidimensionalen Barcodes, dargestellt werden kann. Für diesen Fall kann die optische Kommunikationsschnittstelle 203 des Chipkartenlesers 201 einen Bildsensor oder eine integrierte Kamera aufweisen, welcher diese Anzeige erfassen kann. Der Prozessor 205 kann in diesem Fall die Barcodeauswertung durchführen.

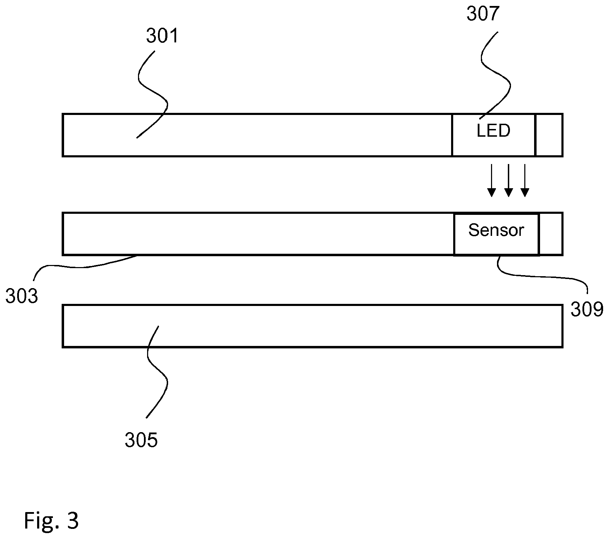

Fig. 3 zeigt eine Anordnung umfassend eine Chipkarte 301, einen Kommunikationsadapter 303 sowie einen Chipkartenleser 305. Die Chipkarte 301 kann beispielsweise eine RFID-Smartcard sein. Die Chipkarte 301 umfasst ferner einen integrierten Schaltkreis, welcher in Fig. 3 nicht dargestellt ist. Die Chipkarte 301 umfasst ferner eine optische Kommunikationsschnittstelle 307, welche beispielsweise eine LED aufweisen kann und ausgebildet ist, optische Signale auszusenden.

Der Chipkartenleser 305 kann ein RFID-Reader sein, welcher über ein elektromagnetisches Feld kommunizieren kann. Damit der Chipkartenleser 305 mit der Chipkarte 301 kommunizieren kann, ist der Kommunikationsadapter 303 mit einem Sensor 309 versehen, welcher ein Photodetektor sein kann, die optischen Signale von der optische Kommunikationsschnittstelle 307 der Chipkarte 301 empfängt und in elektrische Signale bzw. in ein elektromagnetisches Feld umsetzt. Der Kommunikationsadapter 303 kann als eine Adapter-Chipkarte, beispielsweise als eine Adapter-Smartcard, geformt sein, welche zwischen dem Chipkartenleser 305 und der Chipkarte 301 beispielsweise als eine kontaktlose Karte anordenbar ist. Der Kommunikationsadapter 303 kann ausgebildet sein, optische Signale von der optischen Kommunikationsschnittstelle 307 in eine Feldmodulation, d.h. in ein elektromagnetisches Feld bzw. in ein elektromagnetisches Signal gemäß der RFID-Technologie, umzusetzen.

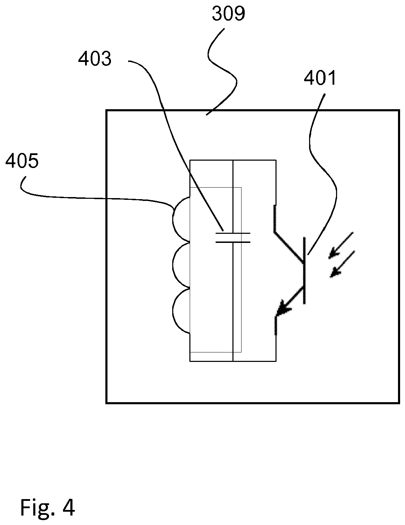

Hierzu kann der Sensor 309 beispielsweise die in Fig. 4 schematisch dargestellte Struktur aufweisen mit einem Phototransistor 401, einer parallel zum Source- und Drain des Phototransistors 401 geschalteten Kapazität 403 sowie einer parallel zu der Kapazität 403 geschalteten Antenne 405. Der Phototransistor 401 schließt bei Lichteinfall die Antenne 405 kurz, so dass elektromagnetische Felder gemäß den optischen Signalen erzeugt und ausgestrahlt werden können.

Gemäß einer Ausführungsform kann auf die Antenne 405 verzichtet werden, sofern der Sensor 309 beispielsweise mit der Chipkarte 305 kontaktbehaftet verbindbar ist.

Gemäß einer Ausführungsform kann der Sensor 309 einen Hilfsträger für die Modulation eines Feldes generieren und diesen mit dem empfangenen Lichtsignal modulieren. Diese Ausführungsform ist vorteilhaft, weil sie eine Reduktion eines Software- und/oder Hardwareaufwandes auf dem Chipkartenleser 305 ermöglicht.

Die Kommunikation zwischen dem Chipkartenleser 305 und dem Kommunikationsadapter 303 kann beispielsweise auf der Basis elektromagnetischer Felder in an sich bekannter Weise erfolgen. Das empfangene elektromagnetische Feld kann daraufhin in ein optisches Signal umgewandelt werden, das zu der optischen Kommunikationsschnittstelle 307 der Chipkarte 301 ausgestrahlt werden kann. Mit der in Fig. 3 dargestellten Anordnung kann die Leistung der abgestrahlten elektromagnetischen Felder geringer sein als im Falle einer herkömmlichen RFID-Anwendung, wodurch die Abhörsicherheit ebenfalls erhöht werden kann. Gemäß einer Ausführungsform kann die Übertragungsstrecke zwischen dem Kommunikationsadapter 303 und dem Chipkartenleser 305 zusätzlich elektromagnetisch abgeschirmt werden.

Gemäß einer Ausführungsform kann der Kommunikationsadapter 303 eingerichtet sein, ein Signal des Chipkartenlesers, das beispielsweise mittels eines elektromagnetischen Feldes übertragen wird, auszuwerten. Hierzu kann der Kommunikationsadapter 303 einen Prozessor oder eine Prozessoreinheit umfassen, welcher eine kryptographische Signalverschlüsselung vornimmt. Auf diese Weise wird eine verschlüsselte Kommunikation zwischen dem Kommunikationsadapter 303 und der Chipkarte 301 realisiert, so dass die Signale nur für die Chipkarte 301, die optische Kommunikationsschnittstelle 307 und den Photodetektor 301 lesbar gemacht werden können.

Gemäß einer weiteren Ausführungsform, die nicht Teil der Erfindung ist, kann auf den Kommunikationsadapter 303 verzichtet werden, sofern der Chipkartenleser 305 hardwaremäßig angepasst wird. Hierzu kann der Chipkartenleser eingerichtet sein, optische Signale in elektromagnetische Signale, insbesondere RF-Signale, umzusetzen. Gemäß einer Ausführungsform ist hier keine separate Antenne notwendig. Denn ein Ausgang eines RFID-Chips, welcher durch den Prozessor bereitgestellt werden kann, des Chipkartenlesers 305 kann wie vorstehend ausgeführt verwendet werden. Des Weiteren kann auch direkt das Signal des RFID-Chips für die Modulation einer LED genutzt werden.

Gemäß einer Ausführungsform kann der Chipkartenleser 305 auch eine optische Kommunikationsschnittstelle umfassen, um ebenfalls optisch mit dem Kommunikationsadapter 303 zu kommunizieren.

Gemäß einer Ausführungsform kann der Chipkartenleser 305 auch ein elektromagnetisches Feld erzeugen und die Daten bidirektional mit beispielsweise einer LED und einen Sensor zwischen dem Chipkartenleser 305 und der Chipkarte 301 übertragen.

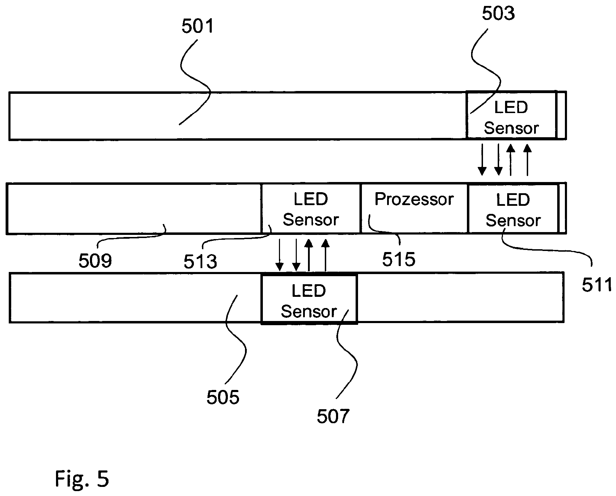

Fig. 5 zeigt eine Anordnung mit einer Chipkarte 501, welche eine optische Kommunikationsschnittstelle 503 umfasst. Die optische Kommunikationsschnittstelle 503 kann beispielsweise zur bidirektionalen Kommunikation mittels optischer Signale eingesetzt werden. Hierzu kann die optische Kommunikationsschnittstelle 503 einen Sensor, beispielswiese einen Photodetektor, und eine LED zur Ausstrahlung von optischen Signalen umfassen.

Die Anordnung umfasst ferner einen Chipkartenleser 505, welcher eine optische Kommunikationsschnittstelle 507 umfasst. Die optische Kommunikationsschnittstelle 507 kann aufgebaut sein wie die optische Kommunikationsschnittstelle 503 der Chipkarte 501.

Gemäß einer Ausführungsform, die nicht Teil der Erfindung ist, kann der Chipkartenleser 505 unmittelbar mit der Chipkarte 501 optisch kommunizieren. Hierbei können die optischen Kommunikationsschnittstellen 503, 507 beispielsweise einander gegenüber angeordnet sein, falls die Chipkarte 501, welche eine RFID-Smartcard sein kann, in einer in Fig. 5 nicht dargestellten Aufnahme des Chipkartenlesers 505, welche ein RFID-Reader sein kann, eingesteckt ist.

Gemäß einer Ausführungsform kann zur Kommunikation zwischen dem Chipkartenleser 505 und der Chipkarte 501 ein Kommunikationsadapter 509 mit einer ersten optischen Kommunikationsschnittstelle 511 für die optische Kommunikation mit der optischen Kommunikationsschnittstelle 503 der Chipkarte 501 und mit einer zweiten optischen Kommunikationsschnittstelle 513 für die optische Kommunikation mit der optischen Kommunikationsschnittstelle 507 des Chipkartenlesers 505 eingesetzt werden. Die optischen Kommunikationsschnittstellen 511 und 513 können wie die optischen Kommunikationsschnittstellen 503 und 507 aufgebaut sein.

Gemäß einer Ausführungsform umfasst der Kommunikationsadapter 509 einen Prozessor 515, welcher ausgebildet ist, eine kryptographische Signalentschlüsselung oder eine kryptographische Signalverschlüsselung vorzunehmen. Der Prozessor 515 kann ferner als ein Controller eingerichtet sein, um die Kommunikation zwischen dem Chipkartenleser 505 und der Chipkarte 501 zu steuern.

Die in den Fig. 3 und 5 dargestellten Ausführungsbeispiele zeigen Anordnungen mit Chipkarten 301, 501, Kommunikationsadaptern 303, 509 und Chipkartenlesern 305, 505. Die Chipkarten 301, 501, die Kommunikationsadapter 303, 509 sowie die Chipkartenleser 305, 505 formen gemäß einem Aspekt jedoch jeweils für sich eigenständige Ausführungsformen ohne die Merkmale der jeweils übrigen Elemente.

### Bezugszeichenliste

- 101: Chipkarte
- 103: integrierter Schaltkreis
- 105: optische Kommunikationsschnittstelle
- 201: Chipkartenleser
- 203: optische Kommunikationsschnittstelle
- 205: Prozessor
- 301: Chipkarte
- 303: Kommunikationsadapter
- 305: Chipkartenleser
- 307: optische Kommunikationsschnittstelle
- 309: Sensor
- 401: Phototransistor
- 403: Kapazität
- 405: Antenne
- 505: Chipkartenleser
- 501: Chipkarte
- 503: Kommunikationsschnittstelle
- 505: Chipkartenleser
- 507: Kommunikationsschnittstelle
- 509: Kommunikationsadapter
- 511: erste optische Kommunikationsschnittstelle
- 513: zweite optische Kommunikationsschnittstelle
- 515: Prozessor

## Patentansprüche

1. Kommunikationsadapter (509) für die Kommunikation zwischen einer Chipkarte (501), welche einen integrierten Schaltkreis (103) und eine optische Kommunikationsschnittstelle (105, 307, 503) zum Kommunizieren mit dem integrierten Schaltkreis (103) aufweist, und einem Chipkartenleser (505) zum Kommunizieren mit dem integrierten Schaltkreis (103) der Chipkarte (501), wobei
der Chipkartenleser (505) eine optische Kommunikationsschnittstelle (203, 507) für die Kommunikation mit der Chipkarte (501) umfasst, wobei
der Kommunikationsadapter (509) eine erste optische Kommunikationsschnittstelle (511) für die Kommunikation mit der optischen Kommunikationsschnittstelle (105, 307, 503) der Chipkarte (501) und eine zweite optische Kommunikationsschnittstelle (513) für die Kommunikation mit der optischen Kommunikationsschnittstelle (203, 507) des Chipkartenlesers (505) umfasst,
wobei der Kommunikationsadapter (509) als eine Kommunikationsadapter-Chipkarte ausgebildet ist,
**dadurch gekennzeichnet, dass**
die erste und zweite optische Kommunikationsschnittstelle (513) des Kommunikationsadapters (509) eingerichtet sind, jeweils optische Signale zu empfangen und auszusenden, um eine optische Entkopplung zwischen dem Chipkartenleser (505) und der Chipkarte (501) zu bewirken.

2. Kommunikationsadapter (509) nach Anspruch 1, wobei zwischen der ersten optischen Kommunikationsschnittstelle (511) und der zweiten optischen Kommunikationsschnittstelle (513) ein Prozessor (515) angeordnet ist.

3. Verfahren zur Kommunikation zwischen einer Chipkarte (501), welche einen integrierten Schaltkreis (103) und eine optische Kommunikationsschnittstelle (105, 307, 503) zum Kommunizieren mit dem integrierten Schaltkreis (103) aufweist, und einem Chipkartenleser (505) zum Kommunizieren mit dem integrierten Schaltkreis (103) der Chipkarte (501), wobei
der Chipkartenleser (505) eine optische Kommunikationsschnittstelle (203, 507) für die Kommunikation mit der Chipkarte (501) umfasst,
**dadurch gekennzeichnet, dass**
zwischen der Chipkarte (501) und dem Chipkartenleser (505) mittelbar über einen Kommunikationsadapter (509), welcher eine erste und eine zweite optische Kommunikationsschnittstelle (513) aufweist, die eingerichtet sind, jeweils optische Signale zu empfangen und auszusenden, optische Signale ausgetauscht werden, so dass eine optische Entkopplung zwischen dem Chipkartenleser (505) und der Chipkarte (501) bewirkt wird.

4. Anordnung, umfassend einen Chipkartenleser (505) zum Kommunizieren mit einem integrierten Schaltkreis (103) einer Chipkarte (501), wobei der Chipkartenleser (505) eine optische Kommunikationsschnittstelle (203, 507) für die Kommunikation mit der Chipkarte (501) umfasst, **gekennzeichnet durch** einen Kommunikationsadapter (509) nach Anspruch 1 oder 2.

5. Anordnung nach Anspruch 4, wobei die optische Kommunikationsschnittstelle (203, 507) des Chipkartenlesers (505) eine Licht emittierende Diode umfasst, welche ausgebildet ist, ein optisches Signal auszusenden.

6. Anordnung nach Anspruch 4 oder 5, wobei die optische Kommunikationsschnittstelle (203, 507) des Chipkartenlesers (505) einen optischen Sensor zum Erfassen eines optischen Signals oder einer optischen Anzeige umfasst.

7. Anordnung nach einem der Ansprüche 4 bis 6, wobei der Chipkartenleser (505) eine Chipkartenaufnahme zur Aufnahme der Chipkarte (501) und eine Adapteraufnahme für die Aufnahme des Kommunikationsadapters (509) für die optische Kommunikation zwischen der Chipkarte (501) und dem Chipkartenleser (505) umfasst.

8. Anordnung nach einem der Ansprüche 4 bis 7, welche eine Chipkarte (501) aufweist, wobei die Chipkarte (501) einen integrierten Schaltkreis (103) und eine optische Kommunikationsschnittstelle (105, 307, 503) zum Kommunizieren mit dem integrierten Schaltkreis (103) aufweist.

## Claims

1. Communication adapter (509) for communication between a chip card (501) comprising an integrated circuit (103) and an optical communication interface (105, 307, 503) for communicating with the integrated circuit (103), and a chip card reader (505) for communicating with the integrated circuit (103) of the chip card (501), wherein
the chip card reader (505) comprises an optical communication interface (203, 507) for communicating with the chip card (501), wherein
the communication adapter (509) comprises a first optical communication interface (511) for communicating with the optical communication interface (105, 307, 503) of the chip card (501) and a second optical communication interface (513) for communicating with the optical communication interface (203, 507) of the chip card reader (505),
wherein the communication adapter (509) is formed as a communication adapter chip card,
**characterized in that**
the first and second optical communication interfaces (513) of the communication adapter (509) are configured to receive and transmit optical signals, respectively, to effect optical decoupling between the chip card reader (505) and the chip card (501).

2. Communication adapter (509) according to claim 1,
wherein a processor (515) is arranged between the first optical communication interface (511) and the second optical communication interface (513).

3. Method for communication between a chip card (501) comprising an integrated circuit (103) and an optical communication interface (105, 307, 503) for communicating with the integrated circuit (103), and a chip card reader (505) for communicating with the integrated circuit (103) of the chip card (501), wherein
the chip card reader (505) comprises an optical communication interface (203, 507) for communicating with the chip card (501),
**characterized in that**
optical signals are exchanged between the chip card (501) and the chip card reader (505) indirectly via a communication adapter (509) comprising first and second optical communication interfaces (513) configured to receive and transmit optical signals respectively, effecting an optical decoupling between the chip card reader (505) and the chip card (501).

4. Arrangement, comprising a chip card reader (505) for communicating with an integrated circuit (103) of a chip card (501), wherein the chip card reader (505) comprises an optical communication interface (203, 507) for communicating with the chip card (501), **characterized by** a communication adapter (509) according to claim 1 or 2.

5. Arrangement according to claim 4, wherein the optical communication interface (203, 507) of the chip card reader (505) comprises a light emitting diode configured to emit an optical signal.

6. Arrangement according to claim 4 or 5, wherein the optical communication interface (203, 507) of the chip card reader (505) comprises an optical sensor for detecting an optical signal or an optical display.

7. Arrangement according to one of claims 4 to 6, wherein the chip card reader (505) comprises a chip card receptacle for receiving the chip card (501) and an adapter receptacle for receiving the communication adapter (509) for the optical communication between the chip card (501) and the chip card reader (505).

8. Arrangement according to one of claims 4 to 7, which comprises a chip card (501), the chip card (501) comprising an integrated circuit (103) and an optical communication interface (105, 307, 503) for communicating with the integrated circuit (103).

## Revendications

1. Adaptateur de communication (509) pour la communication entre une carte à puce (501) présentant un circuit intégré (103) et une interface de communication optique (105, 307, 503) destinée à communiquer avec le circuit intégré, et un lecteur de carte à puce (505) destiné à communiquer avec le circuit intégré (103) de la carte à puce (501), dans lequel
le lecteur de carte à puce (505) comprend une interface de communication optique (203, 507) pour la communication avec la carte à puce (501), dans lequel
l'adaptateur de communication (509) comprend une première interface de communication optique (511) pour la communication avec l'interface de communication optique (105, 307, 503) de la carte à puce (501) et une deuxième interface de communication optique (513) pour la communication avec l'interface de communication optique (203, 507) du lecteur de carte à puce (505),
l'adaptateur de communication (509) étant réalisé sous forme de carte à puce d'adaptateur de communication,
**caractérisé en ce que** les première et deuxième interfaces de communication optiques (513) de l'adaptateur de communication (509) sont agencées respectivement pour recevoir et émettre des signaux optiques afin de provoquer un découplage optique entre le lecteur de carte à puce (505) et la carte à puce (501).

2. Adaptateur de communication (509) selon la revendication 1, dans lequel un processeur (515) est disposé entre la première interface de communication optique (511) et la deuxième interface de communication optique (513).

3. Procédé de communication entre une carte à puce (501) présentant un circuit intégré (103) et une interface de communication optique (105, 307, 503) destinée à communiquer avec le circuit intégré (103), et un lecteur de carte à puce (505) destiné à communiquer avec le circuit intégré (103) de la carte à puce (501), dans lequel
le lecteur de carte à puce (505) comprend une interface de communication optique (203, 507) destinée à la communication avec la carte à puce (501),
**caractérisé en ce qu'**entre la carte à puce (501) et le lecteur de carte à puce (505), des signaux optiques sont échangés de manière indirecte par l'intermédiaire d'un adaptateur de communication (509) présentant une première et une deuxième interface de communication optique (513) agencées respectivement pour recevoir et émettre des signaux optiques, de façon à provoquer un découplage optique entre le lecteur de carte à puce (505) et la carte à puce (501).

4. Agencement, comprenant un lecteur de carte à puce (505) destiné à communiquer avec un circuit intégré (103) d'une carte à puce (501), le lecteur de carte à puce (505) comprenant une interface de communication optique (203, 507) destinée à la communication avec la carte à puce (501), **caractérisé par** un adaptateur de communication (509) selon la revendication 1 ou 2.

5. Agencement selon la revendication 4, dans lequel l'interface de communication optique (203, 507) du lecteur de carte à puce (505) comprend une diode électroluminescente réalisée pour émettre un signal optique.

6. Agencement selon la revendication 4 ou 5, dans lequel l'interface de communication optique (203, 507) du lecteur de carte à puce (505) comprend un capteur optique pour détecter un signal optique ou un affichage optique.

7. Agencement selon l'une quelconque des revendications 4 à 6, dans lequel le lecteur de carte à puce (505) comprend un logement de carte à puce destiné à recevoir la carte à puce (501) et un logement d'adaptateur destiné à recevoir l'adaptateur de communication (509) pour la communication optique entre la carte à puce (501) et le lecteur de carte à puce (505).

8. Agencement selon l'une quelconque des revendications 4 à 7 présentant une carte à puce (501), la carte à puce (501) présentant un circuit intégré (103) et une interface de communication optique (105, 307, 503) pour communiquer avec le circuit intégré (103).
